# EUROPEAN PATENT SPECIFICATION

(11) **EP 4 180 338 B1**
(45) Date of publication and mention of the grant of the patent: **08.01.2025**
(21) Application number: 21208470.1
(22) Date of filing: 16.11.2021
(51) Int. Cl.: B64F 5/30

(54) **METHOD AND SYSTEM FOR BLOWING OFF AIR**
VERFAHREN UND SYSTEM ZUM ABBLASEN VON LUFT
PROCÉDÉ ET SYSTÈME D'EVACUATION D'AIR

(43) Date of publication of application: 17.05.2023
(73) Proprietor: Airbus Operations GmbH, 21129 Hamburg (DE)
(72) Inventor: SCHLEHE, Eike, 21129 Hamburg (DE); BRÖKER, Wolfgang, 21129 Hamburg (DE)
(74) Representative: Isarpatent

(56) References cited:
- EP-A1- 2 982 606
- DE-A1- 1 934 947
- US-A1- 2010 000 186

## Description

The present invention concerns a method and system for blowing off air from a bleed air system of an aircraft. Bleed air is compressed air taken from the compressor stage of a gas turbine upstream of its fuel-burning sections. Cleaning of at least part of the bleed air system is illustrated by document EP-A1-2 982 606, this prior art disclosing an approach for performing a cleaning cycle on an aircraft turbine engine with a mobile cleaning agent supply unit.

In civil aircraft, bleed air's primary use is to provide pressure for the aircraft cabin by supplying air to the environmental control system. Bleed air is used on many aircraft systems because it is easily available, reliable, and a potent source of power. When used for cabin pressurization, the bleed air from the engine must first be cooled by passing it through an air-to-air heat exchanger cooled by cold outside air. It is then fed to an air cycle machine unit that regulates the temperature and flow of air into the cabin, keeping the environment comfortable.

Today the first time the bleed air from the engines is switched "ON", this bleed air is supplied to the air conditioning packs and from there to cockpit and cabin. Residuals left over from production of the components and System assembly will be "burned off" by the hot bleed air and may be introduced to the air condition system. This generally seen as a necessary side effect of the construction of the bleed air system, which would rather be avoided, but so far, no way of avoiding this has been suggested.

In view of this, it is an objective of the present invention to provide a more convenient way of blowing off air from a bleed air system of an aircraft.

According to the present invention, this problem is solved by a method with the features of independent claim 1 and a system with the features of independent claim 6.

To that effect, a first aspect of the invention provides a method for blowing off air from an aircraft bleed air system. A coupling is attached to a high pressure bleed air connector of the bleed air system. The coupling is configured to hold open a check valve of the high pressure bleed air connector. Air from the bleed air system is channeled through a high pressure hose connected to the coupling.

A further aspect of the invention provides a system comprising an aircraft bleed air system comprising a high pressure bleed air connector, wherein the high pressure bleed air connector comprises a check valve configured to only allow high pressure air to be introduced into the bleed air system, and an equipment wagon comprising a coupling configured to hold open the check valve of the high pressure bleed air connector to allow bleed air to be blown off from the aircraft bleed system, and a high pressure hose connected to the coupling and configured to channel the air blown off from the aircraft bleed air system.

One idea of the present invention lies in utilizing the high pressure bleed air connector already present in the aircraft, which is configured with a check valve to only allow high pressure air to be introduced into the bleed air system, as an outlet for the high pressure air to be blown off from the bleed air system of the aircraft. In this way, the high pressure air can be blown off without first passing through the rest of the bleed air system, in particular through the air conditioning packs, the cockpit, and/or the cabin.

Advantageous embodiments and further developments are apparent from the further dependent claims and from the description with reference to the figures.

According to a further embodiment of the method the high pressure hose is fixated, in particular with weights, before attaching the coupling to the high pressure bleed air connector.

According to a further embodiment, an equipment wagon of the system comprises weights to be attached to the high pressure hose.

According to a further embodiment, the equipment wagon further comprises at least one brace for fixating the equipment wagon.

This provides stability to the high pressure hose, advantageously preventing inadvertent movement of the high pressure hose caused by the high pressure air channeled there through.

According to a further embodiment of the method, air from the bleed air system is channeled through a filter material.

According to a further embodiment of the system, the high pressure hose comprises at least two sections. The equipment wagon of the system may further comprise a housing arranged between two sections of the high pressure hose, wherein the housing is configured to carry a filter material.

In this way, particles of interest can captured from the high pressure air, allowing subsequent analysis of the components of the high pressure air.

According to a further embodiment of the method the amount of high pressure air flowing through the coupling and/or the high pressure hose is regulated with a throttle.

According to a further embodiment, the equipment wagon of the system further comprises a
throttle configured to regulate the amount of high pressure air flowing through the coupling and/or the high pressure hose.

This allows adaptation of the air flow to the air pressure provided by the engines, further reducing inadvertent movement of the high pressure hose.

According to a further embodiment of the method, the high pressure hose comprises a predetermined minimum length, in particular 15 meters.

According to a further embodiment of the system, the high pressure hose comprises a predetermined minimum length, in particular 15 meters.

With this minimum distance, interaction of the high pressure hose with the aircraft proper or personnel due to inadvertent movement of the high pressure hose can be prevented.

The present invention is explained in more detail below with reference to the embodiments shown in the schematic figures.
- Fig. 1: shows an embodiment of an equipment wagon according to an aspect of the present invention;
- Fig. 2: shows a further embodiment of an equipment wagon according to an aspect of the present invention; and
- Fig. 3: shows an flow diagram of a method for blowing off air according to an aspect of the present invention.

The accompanying figures are intended to provide a further understanding of embodiments of the invention. They illustrate embodiments and, in connection with the description, serve to explain principles and concepts of the invention. Other embodiments and many of the advantages mentioned will be apparent with reference to the drawings. The elements of the drawings are not necessarily shown to scale with respect to each other.

In the figures of the drawings, identical elements, features and components that have the same function and the same effect are each given the same reference signs, unless otherwise specified.

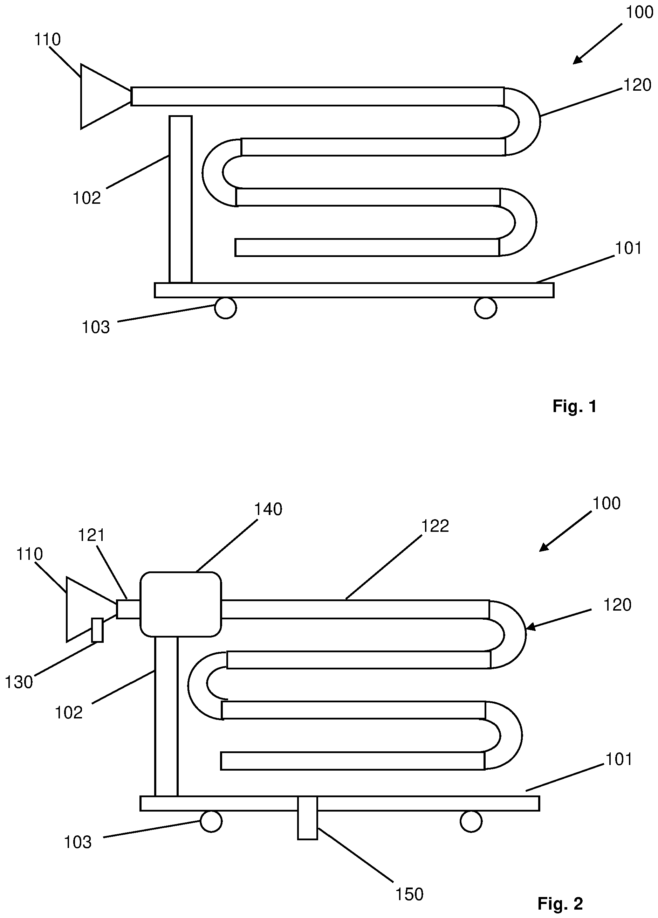

Fig. 1 shows an embodiment of an equipment wagon 100 of a system according to an embodiment of the present invention. The equipment wagon 100 comprises a horizontal platform 101, a vertical handle 102 and a plurality of wheels 103, two of which are shown in Figure 1. The equipment wagon 100 further comprises a coupling 110 and a high pressure hose 120.

The equipment wagon 100 can be easily transported to an aircraft, where it can then be used to perform a method for blowing off air from a bleed air system of said aircraft. For this purpose, the coupling 110 is configured to be attached to a high pressure bleed connector of the aircraft and to hold open a check valve of said high pressure bleed air connector.

Even though the coupling 110 and the high pressure hose 120 are shown as not being directly connected to the other features of the equipment wagon 100, in general it will be advantageous to directly affix the pressure hose 120 to, for example, the vertical handle 102. This way, the weight of the equipment wagon 100 can provide stability to the high pressure hose 120, which can move inadvertently due to the high pressure air being channeled through it. Alternatively or additionally, there affixing means be provided separately at the position of the aircraft, potentially allowing better fixation at the cost of flexibility of positions, where the equipment wagon 100 can be deployed.

High pressure air from the bleed air system can then be channeled through the coupling 110 and subsequently through the high pressure hose 120. It is advantageous if the high pressure hose 120 is of sufficient length, for example 15 meters or longer, in order to ensure that neither the high pressure air nor movement of the high pressure hose 120 caused by the high pressure air channeled there through can inadvertently interact with either the aircraft of personnel.

Fig. 2 shows a further embodiment of an equipment wagon 100. In addition to the features shown in Figure 1, the equipment wagon 100 shown in Figure 2, the high pressure hose 120 comprises two section 121, 122, wherein the first section 121 is attached to the coupling 110. The equipment wagon 100 further comprises a throttle 130 attached to the coupling 110, a housing 140 arranged between two sections 121, 122 of the high pressure hose 120, and a brace 150 attached to the platform 101.

With the throttle 130, the amount of high pressure air flowing through the coupling 110, and therefore through the high pressure hose 120 can be regulated. For that purpose, the throttle could also be attached to the high pressure hose 120 instead of the coupling 110.

The housing 140 can be advantageously used as a point of attachment between the high pressure hose 120 and the vertical handle 102, as shown in Figure 2. The housing 140 can also be configured to carry a filter material. Such a filter material can collect various particles of interest from the high pressure air channeled through the housing 140 for purposes of later analysis.

The brace 150 can be used to provide further stability to both the equipment wagon 150 and therefore the high pressure hose 120 during application. In addition or alternatively, the wheels 103 can comprise brakes to provide further stability.

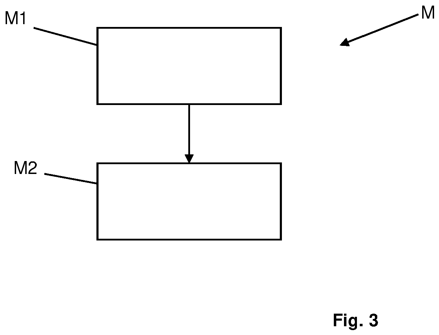

Fig. 3 shows a flow diagram of an embodiment of a method M according to an aspect of the present invention. In a first step M1a coupling is attached to a high pressure bleed air connector of the bleed air system. In a second step M2, air from the bleed air system is channeled through a high pressure hose connected to the coupling.

In further, optional method steps, not shown in Figure 3, the high pressure hose can be fixated before the coupling is attached to the high pressure bleed air connector, the high pressure air can be channeled through a filter material, and/or the amount of air channeled through the coupling and/or the high pressure hose can be regulated with a throttle.

### List of reference signs

- 100: equipment wagon
- 101: platform
- 102: handle
- 103: wheel
- 110: coupling
- 120: high pressure hose
- 121: section
- 122: section
- 130: throttle
- 140: housing
- 150: brace
- M: method of blowing off air
- M1: step of attaching coupling
- M2: step of channeling air

## Claims

1. Method (M) for blowing off air from an aircraft bleed air system, comprising:
attaching (M1) a coupling (110) to a high pressure bleed air connector of the bleed air system, wherein the coupling (110) is configured to hold open a check valve of the high pressure bleed air connector; and
channeling (M2) air from the bleed air system through a high pressure hose (120) connected to the coupling (110).

2. Method (M) according to claim 1, further comprising a step of fixating the high pressure hose (120), in particular with weights, before attaching the coupling (110) to the high pressure bleed air connector.

3. Method (M) according to claim 1 or claim 2, wherein air from the bleed air system is channeled through a filter material.

4. Method (M) according to any one of the preceding claims, further comprising a step of regulating the amount of high pressure air flowing through the coupling (110) and/or the high pressure hose (120) with a throttle (130).

5. Method (M) according to any one of the preceding claims, wherein the high pressure hose (120) comprises a predetermined minimum length, in particular 15 meters.

6. System, comprising:
an aircraft bleed air system comprising a high pressure bleed air connector, wherein the high pressure bleed air connector comprises a check valve configured to only allow high pressure air to be introduced into the bleed air system; and
an equipment wagon (100) comprising a coupling (110) configured to hold open the check valve of the high pressure bleed air connector to allow bleed air to be blown off from the aircraft bleed system; and a high pressure hose (120) connected to the coupling (110) and configured to channel the air blown off from the aircraft bleed air system.

7. System according to claim 6, wherein the equipment wagon further comprises weights to be attached to the high pressure hose (120).

8. System according to claim 6 or claim 7, wherein the equipment wagon further comprises at least one brace (150) for fixating the equipment wagon (100).

9. System according to one of claims 6 to 8, wherein the high pressure hose (120) comprises at least two sections (121; 122).

10. System according to claim 9, wherein the equipment wagon further comprises a housing (140) arranged between two sections (121; 122) of the high pressure hose (120), wherein the housing (140) is configured to carry a filter material.

11. System according to one of claims claim 6 to 10, wherein the equipment wagon further comprises a throttle (130) configured to regulate the amount of high pressure air flowing through the coupling (110) and/or the high pressure hose (120).

12. System according to one of claims 6 to 11, wherein the high pressure hose (120) comprises a predetermined minimum length, in particular 15 meters.

## Patentansprüche

1. Verfahren (M) zum Abblasen von Luft aus einem Luftfahrzeugentlüftungssystem, umfassend:
Anbringen (M1) einer Kupplung (110) an einem Hochdruckentlüftungsanschluss des Entlüftungssystems,
wobei die Kupplung (110) dazu ausgelegt ist, ein Rückschlagventil des Hochdruckentlüftungsanschlusses offen zu halten; und
Kanalisieren (M2) von Luft aus dem Entlüftungssystem durch einen Hochdruckschlauch (120), der mit der Kupplung (110) verbunden ist.

2. Verfahren (M) nach Anspruch 1, ferner umfassend einen Schritt des Fixierens des Hochdruckschlauchs (120), insbesondere mit Gewichten, vor Anbringen der Kupplung (110) an dem Hochdruckentlüftungsanschluss.

3. Verfahren (M) nach Anspruch 1 oder Anspruch 2, wobei Luft aus dem Entlüftungsluftsystem durch ein Filtermaterial kanalisiert wird.

4. Verfahren (M) nach einem der vorhergehenden Ansprüche, ferner umfassend einen Schritt des Regelns der Menge an durch die Kupplung (110) und/oder den Hochdruckschlauch (120) strömender Hochdruckluft mit einer Drosselklappe (130).

5. Verfahren (M) nach einem der vorhergehenden Ansprüche, wobei der Hochdruckschlauch (120) eine vorgegebene Mindestlänge, insbesondere 15 Meter, umfasst.

6. System, umfassend:
ein Luftfahrzeugentlüftungssystem, das einen Hochdruckentlüftungsanschluss umfasst, wobei der Hochdruckentlüftungsanschluss ein Rückschlagventil umfasst, das dazu ausgelegt ist, nur ein Einleiten von Hochdruckluft in das Entlüftungssystem zu erlauben; und
einen Ausrüstungswagen (100), umfassend eine Kupplung (110), die dazu ausgelegt ist, das Rückschlagventil des Hochdruckentlüftungsanschlusses offen zu halten, damit Entlüftungsluft aus dem Luftfahrzeugentlüftungssystem abgeblasen werden kann; und einen Hochdruckschlauch (120), der mit der Kupplung (110) verbunden und dazu ausgelegt ist, die aus dem Luftfahrzeugentlüftungssystem abgeblasene Luft zu kanalisieren.

7. System nach Anspruch 6, wobei der Ausrüstungswagen ferner Gewichte umfasst, die an dem Hochdruckschlauch (120) anzubringen sind.

8. System nach Anspruch 6 oder Anspruch 7, wobei der Ausrüstungswagen ferner mindestens eine Strebe (150) zum Fixieren des Ausrüstungswagens (100) umfasst.

9. System nach einem der Ansprüche 6 bis 8, wobei der Hochdruckschlauch (120) mindestens zwei Abschnitte (121; 122) umfasst.

10. System nach Anspruch 9, wobei der Ausrüstungswagen ferner ein Gehäuse (140) umfasst, das zwischen zwei Abschnitten (121; 122) des Hochdruckschlauchs (120) angeordnet ist, wobei das Gehäuse (140) dazu ausgelegt ist, ein Filtermaterial zu tragen.

11. System nach einem der Ansprüche 6 bis 10, wobei der Ausrüstungswagen ferner eine Drosselklappe (130) umfasst, die dazu ausgelegt ist, die Menge an durch die Kupplung (110) und/oder den Hochdruckschlauch (120) strömender Hochdruckluft zu regeln.

12. System nach einem der Ansprüche 6 bis 11, wobei der Hochdruckschlauch (120) eine vorbestimmte Mindestlänge, insbesondere 15 Meter, umfasst.

## Revendications

1. Procédé (M) d'évacuation d'air à partir d'un système de prélèvement d'air d'aéronef, comprenant :
l'attache (M1) d'un couplage (110) à un raccord de prélèvement d'air à haute pression du système de prélèvement d'air, le couplage (110) étant configuré pour maintenir ouvert un clapet anti-retour du raccord de prélèvement d'air à haute pression ; et
la canalisation (M2) de l'air provenant du système de prélèvement d'air par le biais d'un tuyau à haute pression (120) raccordé au couplage (110).

2. Procédé (M) selon la revendication 1, comprenant en outre une étape de fixation du tuyau à haute pression (120), en particulier avec des poids, avant d'attacher le couplage (110) au raccord de prélèvement d'air à haute pression.

3. Procédé (M) selon la revendication 1 ou la revendication 2, dans lequel l'air provenant du système de prélèvement d'air est canalisé par le biais d'un matériau filtre.

4. Procédé (M) selon l'une quelconque des revendications précédentes, comprenant en outre une étape consistant à réguler la quantité d'air à haute pression s'écoulant par le biais du couplage (110) et/ou du tuyau à haute pression (120) avec un étranglement (130).

5. Procédé (M) selon l'une quelconque des revendications précédentes, dans lequel le tuyau à haute pression (120) comprend une longueur minimale prédéterminée, en particulier 15 mètres.

6. Système, comprenant :
un système de prélèvement d'air d'aéronef comprenant un raccord de prélèvement d'air à haute pression, le raccord de prélèvement d'air à haute pression comprenant un clapet anti-retour configuré pour permettre uniquement l'introduction d'air à haute pression dans le système de prélèvement d'air ; et
un wagon d'équipement (100) comprenant un couplage (110) configuré pour maintenir ouvert le clapet anti-retour du raccord de prélèvement d'air à haute pression afin de permettre au prélèvement d'air d'être soufflé à partir du système de prélèvement d'aéronef ; et un tuyau à haute pression (120) raccordé au couplage (110) et configuré pour canaliser l'air soufflé à partir du système de prélèvement d'air.

7. Système selon la revendication 6, dans lequel le wagon d'équipement comprend en outre des poids à attacher au tuyau à haute pression (120).

8. Système selon la revendication 6 ou la revendication 7, dans lequel le wagon d'équipement comprend en outre au moins une entretoise (150) pour fixer le wagon d'équipement (100).

9. Système selon l'une des revendications 6 à 8, dans lequel le tuyau à haute pression (120) comprend au moins deux sections (121 ; 122).

10. Système selon la revendication 9, dans lequel le wagon d'équipement comprend en outre un logement (140) disposé entre deux sections (121 ; 122) du tuyau à haute pression (120), le logement (140) étant configuré pour porter un matériau filtre.

11. Système selon l'une des revendications 6 à 10, dans lequel le wagon d'équipement comprend en outre un étranglement (130) configuré pour réguler la quantité d'air à haute pression s'écoulant à travers le couplage (110) et/ou le tuyau à haute pression (120).

12. Système selon l'une des revendications 6 à 11, dans lequel le tuyau à haute pression (120) comprend une longueur minimale prédéterminée, en particulier 15 mètres.
